# EUROPÄISCHE PATENTSCHRIFT

(11) **EP 1 217 053 B1**
(45) Veröffentlichungstag und Bekanntmachung des Hinweises auf die Patenterteilung: **22.03.2006**
(21) Anmeldenummer: 01128663.0
(22) Anmeldetag: 01.12.2001
(51) Int. Cl.: C09J 7/02, C09J 175/04

(54) **Oberflächenschutzfolie für Lackoberflächen mit einer Selbstklebemasse auf Basis eines Polyurethan-Schaums**
Surface protecting film for painted surfaces comprising a polyurethane foam based pressure sensitive adhesive
Feuille de protection de surface pour surfaces peintes au moyen d'un produit auto-adhésif à base d'une mousse de polyuréthane

(30) Priorität: 20.12.2000 DE 10063661
(43) Veröffentlichungstag der Anmeldung: 26.06.2002
(73) Patentinhaber: tesa AG, 20253 Hamburg (DE)
(72) Erfinder: Schümann, Uwe, Dr., 25421 Pinneberg (DE); Böhm, Nicolai, Dr., 20357 Hamburg (DE); Weiland, Kirstin, 21035 Hamburg (DE)

(56) Entgegenhaltungen:
- EP-A- 0 826 542
- US-A- 5 780 523
- PATENT ABSTRACTS OF JAPAN vol. 018, no. 647 (C-1283), 8. Dezember 1994 (1994-12-08) & JP 06 248242 A (NIPPON KAKOH SEISHI KK), 6. September 1994 (1994-09-06)

## Beschreibung

Die Erfindung betrifft- eine Oberftächenschutzfolie, die aufgrund ihrer weichen Haftklebstoffoberfläche und ihrer großen Witterungsbeständigkeit und Haftungssicherheit besonders für den temporären Schutz von sehr empfindlichen frischen Automobillackoberflächen gegen Verschmutzungen und Beschädigungen, aber auch für andere empfindliche Oberflächen wie Metalle, Kunststoffe und Glasflächen, geeignet ist.

Die Konservierung und der Schutz von Kraftfahrzeugen während des Transports vom Hersteller zum Händler wird schon seit geraumer Zeit praktiziert.
Die herkömmliche Methode der Konservierung von Automobilen ist das Auftragen von Paraffin- oder Acrylatwachsen in der Stärke von 5 bis 20 µm. Es hat sich aber gezeigt, daß insbesondere bei waagerecht liegenden Flächen der Fahrzeuge, wie Motorhaube, Dach und Kofferraumdeckel, eine derart dünne und zumeist ungleichmäßige Schicht gegen äußere Einflüsse, wie beispielsweise die ätzende Wirkung von Vogelkot, nicht genügend Schutz bietet.
Ein erheblicher Nachteil der Paraffinwachsversiegelung ist die notwendige Entkonservierung mittels Dampfstrahl, Tensiden oder Lösungsmitteln. Die umweltgerechte Rückgewinnung und Entsorgung der Rückstände verursachen einen großen apparativen Aufwand sowie sehr hohe Kosten.

Eine aktuelle Entwicklung auf dem Gebiet des Automobil-Transportschutzes ist der Einsatz von Hauben, die das gesamte Fahrzeug bedecken und durch Wärmeeinwirkung paßgenau aufgeschrumpft werden. Solche Haubenlösungen sind sehr kostspielig und erfordern großen Aufwand beim Anlegen der Haube, dem Aufschrumpfen und vor allem beim Einsteigen in den maskierten Wagen. Dafür sind eigens Reißverschlußöffnungen vorgesehen, die zeitraubend geöffnet und wieder verschlossen werden müssen. Die Sicht beim Rangieren eines mit einer Haube eingedeckten Kraftfahrzeugs ist stark beeinträchtigt, und es kommt durch eingeschlossenen Schmutz und durch unvermeidbares Scheuern auf dem Lack stellenweise zu Kratzern.

In den letzten Jahren werden statt dessen verstärkt temporär aufgebrachte selbstklebende Oberflächenschutzfolien angewendet. Diese sind speziell für den mechanischen und chemischen Schutz von frischen Kraftfahrzeuglacken vorgesehen und haben eine gegenüber den Wachsen deutlich verbesserte Schutzwirkung und gegenüber den Hauben den Vorteil, kostengünstiger und deutlich schneller applizierbar zu sein.

Eine wesentliche Anforderung an eine Oberflächenschutzfolie ist ihre Witterungsbeständigkeit über einen Zeitraum von mehr als einem halben Jahr. So muß eine solche Folie auch nach einem halben Jahr intensiver Sonnenlichtexposition in einem Stück abziehbar sein und darf keine Klebmasserückstände auf dem Lack hinterlassen. Sie muß zudem eine ausreichende Anfangsklebrigkeit haben, um sich in schwierigen Verklebungsgeometrien nicht vorzeitig selbsttätig abzulösen, darf gleichzeitig aber auch keine zu große Endklebkraft auf Lack aufweisen, damit die Folie ohne großen Kraftaufwand oder gar Reißen entfernbar ist.

Gemäß dem Stand der Technik werden daher als Folienmaterialien in der Regel Polyolefine oder Mischungen aus solchen, die üblicherweise mit Lichtschutzmitteln und Titandioxid abgemischt sind, verwendet.

Als Selbstklebemassen finden vielfältige Systeme Verwendung, die aber ausnahmslos mit Schwächen behaftet sind.

Selbstklebemassen auf Naturkautschukbasis haben eine relativ gute Anfangshaftung. Diese Massen sind allerdings selbst bei kurzzeitiger Einwirkung von UV-Strahlung nicht alterungsstabil. Dies führt zu starken schmierigen oder lackartig verhärteten Rückständen auf dem Lack nach praxisrelevanten Witterungsbeanspruchungen über einen Zeitraum von einigen Monaten.

In US 5,612,136 ist eine Schutzfolie mit einer Selbstklebemasse auf Acrylatbasis erwähnt. Polyacrylatmassen sind zwar sehr UV-stabil, unterwirft man aber unvernetzte Polyacrylatmassen einer Wechselklimalagerung, so zeigen sie nur teilweise eine gute Verträglichkeit mit Lackoberflächen. Verträglichkeit bedeutet, daß die Lackoberfläche nach Entfernen des Klebebandes keinerlei Deformationen aufweist.

Deformationen sind visuell erkennbare irreversible Veränderungen der Lackoberfläche, die entstehen, wenn der frische, nicht vollständig ausgehärtete Lack mit einer ungeeigneten Schutzfolie abgedeckt wird. Zwei Effekte können beobachtet werden:
- Abdrücke der Schutzfolie im Bereich der Verklebungskanten oder an faltigen Stellen
- Mattierung des Lackes auf der gesamten Verklebungsfläche durch eine rauhe Masseoberfläche

Zudem zeigen Polyacrylatmassen ein unerwünscht starkes Aufziehverhalten. Unter dem Begriff "Aufziehen" versteht der Fachmann die Erhöhung der Verklebungsfestigkeit bei Lagerung des Klebeverbundes. Werden diese Massen chemisch oder durch Strahlen stark vernetzt, lassen sie sich zwar leichter abziehen, verursachen aber auf der anderen Seite verstärkt deutlich sichtbare, bleibende Deformationen der Lackoberfläche.

Selbstklebemassen auf Polyisobutylenbasis (Polyisobutylenhomopolymer oder Butylkautschuk) zeigen nach einer Wechselklimalagerung auf in der Automobilindustrie gebräuchlichen Lacken eine geringe Haftfestigkeit. Die Haftfestigkeit ist bei ruckartiger Beanspruchung, wie sie bei Flattem im Fahrtwind auftritt, so gering, daß die in der Praxis geforderte Verklebungsfestigkeit nicht immer ausreichend gegeben ist. Insbesondere bei Feuchteeinfluß ist die Haftfestigkeit häufig derart reduziert, daß sich die Folie während des Transports von den geschützten Fahrzeugen ablöst, so daß zum einen keine Schutzwirkung mehr besteht und zum anderen ein Sicherheitsrisiko vorliegt, wenn die Folie unkontrolliert nachfolgenden Fahrzeugen auf die Windschutzscheibe weht.
Selbstklebemassen auf Polyisobutylenbasis sind darüber hinaus wenig kohäsiv und zeigen daher Masserückstände beim Abziehen der Folie, insbesondere im Kantenbereich nach UV-Alterung. Darüber hinaus weist diese Selbstklebemasse keine Verträglichkeit mit den im Automobilbau üblichen Dichtungsprofilen beziehungsweise den darin enthaltenen Weichmachern auf. Beim Abziehen der Schutzfolie von Fensterprofilen verbleiben auf dem Gummi Rückstände des Klebers. Derartige Klebeartikel sind in EP 0 519 278 A1, JP 95-325285 und US 5,601,917 beschrieben.

Wesentlich UV-stabiler als Polyisobutylene sind Kleber aus hydrierten Styrol-Dien-Blockcopolymeren, deren Anwendung im JP 08 027 444 beschrieben ist. Ein wesentlicher Nachteil solcher Blockcopolymere ist deren ungenügende Lackverträglichkeit.

Die in der DE 195 32 220 A1 dargelegte Klebefolie mit EVAc-Kleber ist den oben beschriebenen Systemen in der Haftung deutlich überlegen. Diese Klebefolie weist aber beim Abziehen nach langer Verklebungszeit oder hoher Temperatureinwirkung eine deutlich zu hohe Verklebungsfestigkeit auf, wodurch die Klebefolie nur mit relativ hohem Kraftaufwand abgezogen werden kann.

Die WO 96/37568 A1 beschreibt die Verwendung von Polyhexen beziehungsweise Polyocten für einen unpolaren Haftkleber. Die in den Beispielen beschriebenen Polymere weisen zwar ein geringes Aufziehen auf, bedingt durch das niedrige Molekulargewicht derartiger handelsüblicher Polymere führen diese Polymere aber ebenfalls zu Rückständen, die man durch Zugabe anderer Polymere, dort "cold flow restricting agent" genannt, zu vermeiden versucht. Für die Praxis sind die genannten Kleber trotzdem noch zu wenig kohäsiv, was nach Bewitterung zu Rückständen führt, insbesondere wenn das Klebeband durch Wärmeeinwirkung schrumpft.

Ein ähnliches Phänomen zeigen Ethylenpropylendienmischpolymerisate (EPDM), wie sie in DE 197 42 805 A1 genannt werden, sowie Terpolymere auf olefinischer Basis gemäß DE 197 30 193 A1. Beide Polymerisate zeigen außerdem einen äußerst geringen Tack (Soforthaftung), was in der Praxis, insbesondere in stark gekrümmten Bereichen zu Verarbeitungsproblemen führt bzw. lange Andruckzeiten zur Folge hat.

In US 5,972,453 wird eine wiederentfembare Klebfolie für Kraftfahrzeugscheiben beschrieben, deren polyurethanbasierter Klebstoff eine maximale Klebkraft von 0,2 N/cm auf Glas erreicht. Eine derart niedrige Klebkraft ist für eine Anwendung als Transportschutzfolie für Automobillackoberflächen zu gering. Weiterhin werden keine Hinweise gegeben, ob eine solche Folie im Hinblick auf Lackdeformationen für Automobillackoberflächen geeignet ist und wie gegebenenfalls der Polyurethanklebstoff formuliert werden muß.

Aufgabe der Erfindung ist es, eine Oberflächenschutzfolie insbesondere für sehr empfindliche frische Automobillacke zur Verfügung zu stellen, die die geschilderten Nachteile des Standes der Technik nicht oder nicht in dem Maße zeigt. Insbesondere soll die Oberflächenschutzfolie auch auf sehr empfindlichen frischen Lacken über eine außerordentlich gute Lackverträglichkeit verfügen. Weiterhin soll die Folie neben einer für den Fahrzeugtransport angemessenen lnitialklebkraft über eine ausgewogene Endklebkraft, die ein leichtes Abziehen der Folie nach Gebrauch ermöglicht und eine gute Witterungsbeständigkeit sowie Rückstandsfreiheit beim Entfernen verfügen.

Gelöst wird diese Aufgabe durch eine Oberflächenschutzfolie, wie sie im Hauptanspruch niedergelegt ist. Gegenstand der Unteransprüche sind dabei vorteilhafte Weiterbildungen der Oberflächenschutzfolie.

Demgemäß betrifft die Erfindung den Aufbau und die Herstellung einer selbstklebenden Oberflächenschutzfolie aus einer Trägerschicht bestehen aus einer thermoplastischen Polyolefin folie und einer Selbstklebeschicht auf Basis eines geschäumten Polyurethans.

Als Trägerschicht des Klebers dient eine thermoplastische, unverstreckte Polyolefinfolie, welche mindestens ein Polyolefin aus der Gruppe der Polyethylene (zum Beispiel HDPE, LDPE, MDPE, LLDPE, VLLDPE, Copolymere des Ethylens mit polaren Comonomeren) und/oder der Gruppe der Polypropylene (zum Beispiel Polypropylen-Homopolymere, Polypropylen-Random-Copolymere oder Polypropylen-Block-Copolymere) enthalten sollte. Bevorzugt werden Mischungen verschiedener geeigneter Polyolefine verwendet, um die mechanischen und thermischen Eigenschaften sowie Glanz, Extrusionsverhalten, Verankerung des Klebers, usw. optimal einstellen zu können.

Für die Trägerfolien ist eine Dicke von 20 bis 80 µm bevorzugt, gegebenenfalls einschließlich einer Haftvermittlerschicht, die zwischen der Trägerschicht und der Kleberschicht angeordnet ist.

Die Weichheit der Trägerfolie spielt bei der Verformbarkeit während der Applikation der Schutzfolie eine Rolle, die Kraft bei 10 % Dehnung sollte 25 N/15 mm, vorzugsweise 16 N/15 mm, sowohl in Längs- als auch in Querrichtung nicht überschreiten (Zugversuch nach DIN 53455-7-5). Aus diesem Grunde ist es notwendig, daß die Trägerfolien unverstreckt sind. Durch Recken steigt die Kraft bei 10 % Dehnung so stark an, daß die Anschmiegsamkeit nicht mehr gegeben ist.

Um der Trägerfolie die geforderte Witterungs- und Lichtstabilität zu geben, ist der Zusatz von Licht- und UV-Schutzmitteln gemäß einer weiteren hervorragenden Ausgestaltung der Erfindung anzuraten. Ihre Funktion besteht vorrangig in der Vermeidung der Versprödung oder Vergilbung der Trägerfolie.
Die Menge des Lichtschutzmittels und/oder UV-Schutzmittels sollte mindestens 0,15 Gew.-%, vorzugsweise mindestens 0,30 Gew.-% bezogen auf die Trägerfolie betragen.

Derartige Lichtschutzmittel sind bei Gaechter und Müller, Taschenbuch der Kunststoff-Additive, München 1979, bei Kirk-Othmer (3.) 23, 615 - 627, bei Encycl. Polym. Sci. Technol, 14, 125 - 148 und bei Ullmann (4.) 8, 21; 15, 529, 676 beschrieben. lnsbesondere HALS-Lichtschutzmittel wie zum Beispiel Dimethylsuccinat-Polymer mit 4-Hydroxy-2,2,6,6-tetramethyl-1-piperidinethanol (CAS-Nr. 65447-77-0), Bis(2,2,6,6-tetramethyl-4-piperidinyl)sebacat (CAS-Nr. 52829-07-9) oder Poly[[6-[(1,1,3,3-tetramethyl butyl) amino]-1,3,5-triazine-2,4-diyl][[(2,2,6,6-tetramethyl-4-piperidyl) imino] hexamethylene [(2,2,6,6-tetramethyl-4-piperidyl) imino]] (CAS-Nr. 70624-18-9) sind für die erfindungsgemäße Schutzfolie geeignet.

Eine Verwendung von Antioxidantien für die Folie (zum Beispiel sterisch gehinderte Phenole (Irganox 1010) oder Tris-Nonylphenyl-phosphit) ist vorteilhaft, aber nicht zwingend notwendig. Weitere geeignete UV-Absorber, Lichtschutz- und Alterungsschutzmittel sind in der EP 0 763 584 A1 aufgeführt.
Eine zusätzliche Verbesserung der Lichtstabilität der Trägerfolie ist auch durch Zusatz von Titandioxid möglich. Vorteilhaft bezüglich der mechanischen Eigenschaften und der Homogenität des Weißgrades sind 5 bis 15 Gew.-% Titandioxidzusatz.

Vorzugsweise liegt die UV-Durchlässigkeit der Schutzfolie im Bereich von 290 bis 360 nm durch das Zusammenwirken von Lichtschutzmitteln und Pigmenten unter 1 %, vorzugsweise unter 0,1 %.

Der Haftklebstoff der erfindungsgemäßen Schutzfolie ist eine geschäumte Polyurethanschicht. Der Schaum kann offenzellig oder geschlossenzellig sein.

In einer bevorzugten Ausführungsform werden zur Herstellung der Polyurethanschicht aliphatische Isocyanate eingesetzt. In Frage kommen zum Beispiel Isophorondiisocyanat, Hexamethylendiisocyanat, Dicyclohexylmethan-4,4'-diisocyanat, Gemische der genannten Isocyanate oder chemisch daraus abgeleitete Isocyanate, zum Beispiel dimerisierte, trimerisierte oder polymerisierte Typen, die beispielsweise Hamstoff-, Uretdion- oder Isocyanuratgruppen enthalten. Es können aber auch aromatische lsocyanate, wie zum Beispiel Toluylendiisocyanat oder Diphenylmethan-4,4'-diisocyanat, eingesetzt werden oder lsocyanate, die aromatische Gruppen enthalten, in denen die Isocyanatgruppen selbst aber aliphatisch gebunden sind, zum Beispiel m-Tetramethyl-xylen-diisocyanat. Weiterhin können als lsocyanat-Komponente auch Prepolymere eingesetzt werden, also im Vorwege in einem NCO/OH-Verhältnis größer eins hergestellte Umsetzungsprodukte aus Isocyanat und Polyol.

In einer weiteren bevorzugten Ausführungsform werden als Polyol-Komponente Polypropylenglykole, Polyethylenglykole, hydrierte hydroxyl-funktionalisierte Polyisoprene, hydroxyl-funktionalisierte Polyisobutylene oder hydroxyl-funktionalisierte Polyolefine eingesetzt. In Frage kommen auch hydroxyl-funktionalisierte Polybutadiene sowie andere, hydrierte und nicht hydrierte hydroxyl-funktionalisierte Kohlenwasserstoffe. Polytetramethylenglykolether (Polytetrahydrofurane) sind ebenfalls geeignet. In Frage kommen weiterhin Polyester-Polyole sowie Gemische der genannten Polyol-Komponenten. Als Polyol-Komponente können ebenfalls Umsetzungsprodukte aus lsocyanat und Polyol eingesetzt werden, die im Vorwege in einem NCO/OH-Verhältnis kleiner 1 hergestellt wurden. Bekannte Kettenverlängerer, kurzkettige Vernetzer oder Abbrecher können ebenfalls zur Bildung der Polyurethanschicht mitverwendet werden.
Um eine geeignete Streichviskosität zu erzielen, können die Polyurethankomponenten auch mit Lösungsmitteln verdünnt werden.
Neben den aufgezählten Isocyanat-Komponenten und den damit reagierenden Polyol-Komponenten können auch andere Edukte zur Bildung des Polyurethans verwendet werden, ohne den Erfindungsgedanken zu verlassen.

Um die Reaktion zwischen der lsocyanat-Komponente und der mit dem lsocyanat reagierenden Komponente zu beschleunigen, können alle dem Fachmann bekannten Katalysatoren, wie zum Beispiel tertiäre Amine oder zinnorganische Verbindungen eingesetzt werden.

Polyurethane wie oben beschrieben sind in der Herstellung Stand der Technik und beispielsweise in "Ullmann's Encyclopedia of Industrial Chemistry, Vol. A21: Polyurethanes" beschrieben.

In einer vorteilhaften Ausführungsform enthält die Polyurethanschicht weitere Rezeptierungsbestandteile, wie zum Beispiel Füllstoffe, Pigmente, rheologische Additive, Additive zur Verbesserung der Haftung, Weichmacher, Harze (Klebrigmacher), Elastomere, Alterungsschutzmittel (Antioxidantien), Lichtschutzmittel, UV-Absorber sowie sonstige Hilfs- und Zusatzstoffe, wie beispielsweise Trockenmittel (zum Beispiel Molekularsieb-Zeolithe, Calciumoxid), Fließ- und Verlaufmittel, Benetzer (Tenside) oder Katalysatoren.

Als Füllstoffe können alle feingemahlenen festen Zusatzstoffe wie zum Beispiel Kreide, Magnesiumcarbonat, Zinkcarbonat, Kaolin, Bariumsulfat, Titandioxid oder Calciumoxid eingesetzt werden. Weitere Beispiele sind Talkum, Glimmer, Kieselsäure, Silikate oder Zinkoxid. Auch Mischungen der genannten Stoffe können eingesetzt werden.

Die eingesetzten Pigmente können organischer oder anorganischer Natur sein. Beispiele sind alle Arten organischer oder anorganischer Farbpigmente, insbesondere Weißpigmente wie etwa Titandioxid zur Verbesserung der Licht- und UV-Stabilität, sowie Metallpigmente.

Beispiele für rheologische Additive sind pyrogene Kieselsäuren, Schichtsilikate (Bentonite), hochmolekulare Polyamidpulver oder Rhizinusöfderivat-Pulver.

Additive zur Verbesserung der Haftung können zum Beispiel Stoffe aus den Gruppen der Polyamide, Epoxide oder Silane sein.

Beispiele für Weichmacher sind Phthalsäureester, Trimetlitsäureester, Phosphorsäureester, Ester der Adipinsäure sowie andere acyclische Dicarbonsäureester, Fettsäureester, Hydroxycarbonsäureester, Alkylsulfonsäureester des Phenols, aliphatische, cycloaliphatische und aromatische Mineralöle, Kohlenwasserstoffe, flüssige oder halbfeste Kautschuke (zum Beispiel Nitril- oder Polyisoprenkautschuke), flüssige oder halbfeste Polymerisate aus Buten und/oder lsobuten, Acrylsäureester, Polyvinylether, Flüssig- und Weichharze auf Basis der Rohstoffe, die auch die Basis für Klebrigmacherharze darstellen, Wollwachs und andere Wachse, Silikone sowie Polymerweichmacher wie etwa Polyester oder Polyurethane. Besonders geeignet sind alterungsstabile Weichmacher ohne olefinische Doppelbindung.

Geeignete Harze (Klebrigmacher) sind alle natürlichen und synthetischen Harze, wie etwa Kolophonium-Derivate (zum Beispiel durch Disproportionierung, Hydrierung oder Veresterung entstandene Derivate), Cumaron-Inden- und Polyterpen-Harze, aliphatische oder aromatische Kohlenwasserstoff-Harze (C-5, C-9, (C-5)₂-Harze), gemischte C-5/C-9-Harze, hydrierte und teilhydrierte Derivate der genannten Typen, Harze aus Styrol oder α-Methylstyrol sowie Terpen-Phenolharze und weitere wie aufgeführt in Ullmanns Enzyklopädie der technischen Chemie, Band 12, S. 525 - 555 (4. Aufl.), Weinheim.

Geeignete Elastomere sind zum Beispiel EPDM- oder EPM-Kautschuk, Polyisobutylen, Butylkautschuk, Ethylen-Vinylacetat, hydrierte Blockcopolymere aus Dienen (zum Beispiel durch Hydrierung von SBR, cSBR, BAN, NBR, SBS, SIS oder IR, solche Polymere sind zum Beispiel als SEPS und SEBS bekannt) oder Acrylatcopolymere wie ACM.
Unter SEPS versteht der Fachmann Poly[styrol-b-(ethylen-stat-propylen)-b-styrol] sowie unter SEBS Poly[styrol-b-(ethylen-stat.-butylen)-b-styrol].

SEPS steht dabei für Styrol-Ethylen-Propylen-Styrol, bestehend aus einem Dreiblockcopolymeren auf der Basis von Polystyrolendblöcken (S), wobei der Mittelblock aus hydriertem Polyisopren (EP) oder hydriertem Poly(butadien-co-isopren) (EEP) besteht.

Geeignete UV-Absorber, Lichtschutz- und Alterungsschutzmittel für die Klebemassen sind dieselben, die weiter oben für die Stabilisierung der Folie aufgeführt sind, sowie sekundäre aromatische Amine und Derivate des Benzophenons.

Die Rezeptierung der Polyurethane mit weiteren Bestandteilen, wie zum Beispiel Füllstoffen und Weichmachern, ist ebenfalls Stand der Technik und wird besonders bei der Herstellung von Dichtmassen angewendet (vgl. "Ullmann's Encyclopedia of Industrial Chemistry, Vol. A 23: Sealing Materials").

In einer weiteren bevorzugten Ausführungsform wird zur Bildung des Polyurethans ein NCO/OH-Verhältnis von 0,6 bis 1,3 eingestellt.

Zur Erzielung des Schaums wird ein beliebiges Gas eingesetzt, vorzugsweise Stickstoff, Luft, Kohlendioxid oder ein Edelgas.

Die thermoplastische Polyolefinfolie wird in einer bevorzugten Ausführungsform nach dem im folgenden beschriebenen Verfahren mit dem Polyurethan beschichtet:

Es werden in einem Behälter A im wesentlichen die Polyol- und in einem Behälter B im wesentlichen die lsocyanat-Komponente vorgelegt, wobei gegebenenfalls die weiteren Rezeptierungsbestandteile diesen Komponenten bereits zuvor in einem üblichen Mischverfahren zugemischt wurden. Auch das zur Erzielung des Schaums verwendete Gas kann bereits zuvor in die Komponenten eindispergiert worden sein.
In einem Mischer einer Mehrkomponenten-Misch- und Dosieranlage werden die Polyol- und die Isocyanat-Komponente und das Gas, sofern es nicht schon zuvor in eine der Komponenten eindispergiert wurde, gemischt. Das Gas wird dazu unter Druck in den für diesen Zweck konstruierten Mischkopf dosiert. Die Dosierung wird über ein Durchflußmeßgerät automatisch geregelt.
Die somit gemischte, geschäumte Polyurethanmasse wird auf die Polyolefinfolie aufgebracht, die sich bevorzugt mit konstanter Geschwindigkeit bewegt. Die mit der geschäumten Polyurethanmasse beschichtete Polyolefinfolie wird durch einen Wärmekanal geführt, in dem die Polyurethanmasse aushärtet. Das Auftragsgewicht der geschäumten Polyurethanmasse ist beliebig wählbar, vorzugsweise werden Auftragsgewichte zwischen 1 und 100 g/m², besonders bevorzugt zwischen 20 und 90 g/m² eingestellt. Die Dichte des Schaums wird im Bereich zwischen 20 und 1600 Kg/m³ eingestellt, vorzugsweise zwischen 200 und 900 Kg/m³.
Die beschichtete Polyolefinfolie wird abschließend in einer Wickelstation aufgewickelt.

Das beschriebene Verfahren ermöglicht es, lösemittelfrei zu arbeiten und geschäumte Polyurethan-Haftklebemassen in-situ herzustellen.
Um die Verankerung der geschäumten Polyurethanmasse auf der Polyolefinfolie zu verbessern, können alle bekannten Methoden der Oberflächenvorbehandlung, wie beispielsweise Corona-Vorbehandlung, Beflammung, Gasphasenbehandlung (zum Beispiel Fluorierung) eingesetzt werden. Ebenso können alle bekannten Methoden der Primerung eingesetzt werden, wobei die Primerschicht sowohl aus Lösungen oder Dispersionen heraus auf die Polyolefinfolie aufgetragen werden kann als auch im Extrusions- oder Coextrusionsverfahren.

Um die Abrolleigenschaften der gewickelten Rolle zu verbessem, kann die Rückseite der Polyolefinfolie mit einem Trennlack (Releaselack) vorbeschichtet werden oder aber eine trennende co- oder aufextrudierte Rückseitenbeschichtung tragen.

Eine Schutzfolie gemäß obiger Beschreibung, im wesentlichen bestehend aus einer polyolefinischen Trägerschicht und einer Selbstklebeschicht auf Basis eines geschäumten Polyurethans, zeigt aufgrund der geschäumten Polyurethan-Selbstklebeschicht hervorragende Produkteigenschaften, die auch für den Fachmann derartig nicht vorherzusehen waren.

Die geschäumten PU-Selbstklebemassen weisen auf der einen Seite eine gute Haftfestigkeit auf verschiedenen in der Automobilindustrie gebräuchlichen Lacken, auch unter Feuchte- oder Feuchtklimaeinfluß, auf, so daß sich die Schutzfolie auch unter Windeinwirkung oder unter Spannung durch Verklebung auf gewölbten Flächen nicht vom Fahrzeug ablöst. Darüber hinaus zeigt die Selbstklebemasse eine hinreichende Verklebungsfestigkeit innerhalb der ersten Minuten nach Applikation, so daß die Schutzfolie bereits nach einer halben Stunde zum Beispiel einer starken Fahrtwindbelastung (bis zu 160 km/h) ausgesetzt werden kann, andererseits nach längerem Gebrauch ohne hohen Kraftaufwand entfembar ist. Weiterhin weist die erfindungsgemäße Schutzfolie auch ohne Auftragen einer Releaseschicht trotz stark haftenden Klebers eine für den Anwender hinreichend geringe Abrollkraft auf.

Die Klebkraft der erfindungsgemäßen Schutzfolie auf 2K-PU-Lacken liegt in der Regel frisch über 0,2 und nach Wechselklimalagerung unter 5 N/cm (analog Methode AFERA 4001). Auch die Bestrahlung der Schutzfolie mit UV-Licht, beispielsweise Xenotest 150 nach DIN 53387 1-A-X über 800 Stunden, führt zu keinen Mängeln in den Eigenschaften der Schutzfolie: es treten keine Versprödung der Folie und keine Masserückstände beim Abziehen auf.

Die erfindungsgemäße Schutzfolie ist somit besonders zum Montage- oder Transportschutz des frischen Abschlußlacks von Automobilen oder als Verarbeitungs- und Transportschutz von frisch lackierten Stahlblechen geeignet. Die Verklebung der Schutzfolie kann dabei ohne das Auftreten jedweder Nachteile bereits eine halbe Stunde nach Ofendurchgang der lackierten Oberflächen erfolgen, obwohl zu diesem Zeitpunkt der Lack noch nicht seinen Endzustand erreicht hat.
Die Verträglichkeit der Schutzfolie mit dem Lack, d.h. das Lackdeformationsverhalten, ist ausgezeichnet. Weiterhin zeichnet sich die erfindungsgemäße Schutzfolie dadurch aus, daß sie bei Automobilen in großer Breite über Motorhaube, Dach und Kofferraum applizierbar ist und sich aufgrund ihrer Verformbarkeit planen und sogar leicht gewölbten geformten Flächen sehr gut anpaßt. Damit ist der Schutz der am stärksten durch Verschmutzung und mechanische Beschädigung gefährdeten horizontalen Flächen möglich. Aber auch schmale Bereiche wie zum Beispiel der Türschweller unter den Fenstern oder Stoßfänger können leicht abgedeckt werden. Der Schutz der vertikalen Flächen am Fahrzeug bietet sich besonders während der Montage derselben an.
Die Schutzfolie ist beständig gegen Sonnenlicht, Feuchtigkeit, Hitze und Kälte, wobei die Witterungsstabilität von wenigstens einem halben Jahr gegeben ist. Insbesondere der Zusatz von Pigmenten wie Titandioxid sowie von Lichtschutzstabilisatoren führt zu einer Verbesserung der UV-Beständigkeit der Schutzfolie. Auch höchste Sonneneinstrahlungsquoten, wie sie beispielsweise in Florida auftreten, führen nicht zu einem Versagen oder Ablösen der Schutzfolie. Die extrem geringe UV-Durchlässigkeit der Schutzfolie vermeidet die Zersetzung des Klebers durch Sonneneinwirkung.

Darüber hinaus gewährleistet die Festigkeit der Schutzfolie im Vergleich zur Konservierung mit Wachs einen einwandfreien Schutz gegen Verschmutzungen wie Vogelkot und Beschädigungen des gesamten Fahrzeugs durch leichte mechanische Einwirkungen. Nach Gebrauch ist die Schutzfolie trotz der geforderten guten Haftfestigkeit rückstandsfrei und ohne Reißen der Trägerfolie abziehbar. Die stoffliche oder energetische Verwertung der Schutzfolie ist möglich, insbesondere weil selbige halogenfrei ist.

lm folgenden soll die Erfindung anhand von Beispielen erläutert werden, ohne diese damit allerdings einschränken zu wollen.

### Beispiele

Die Beschichtungen erfolgten in den Beispielen auf einer Laborbeschichtungsanlage der Firma Pagendarm. Die Bahnbreite betrug 50 cm. Die Beschichtungsspaltbreite war zwischen 0 und 1 cm variabel einstellbar. Die Länge des Wärmekanals betrug ca. 12 m. Die Temperatur im Wärmekanal war in vier Zonen einteilbar und jeweils zwischen Raumtemperatur und 120 °C frei wählbar.

Es wurde eine Mehrkomponenten-Misch- und Dosieranlage der Firma Spritztechnik-EMC verwendet. Das Mischsystem war dynamisch. Der Mischkopf war für zwei flüssige und eine gasförmige Komponente konzipiert. Der Mischrotor hatte eine variable Drehzahl bis max. ca. 5000 U/min. Bei den Dosierpumpen dieser Anlage handelte es sich um Zahnradpumpen mit einer Förderleistung von max. ca. 2 l/min.

Die A-Komponenten (Polyole und gegebenenfalls Zuschlagsstoffe) wurden in einem evakuierbaren Mischkessel der Firma Molteni vorgemischt.

### Beispiel 1

Eine 50 µm dicke Polyolefinfolie, bestehend aus 60 Gew.-Teilen PP-Homopolymer, 30 Gew.-Teilen LLDPE, 10 Gew.-Teilen Titandioxid und 0,3 Gew.-Teilen eines HALS-Stabilisators (Tinuvin 770) wurde durch Flachfolienextrusion in 1450 mm Breite gefertigt und anschließend für die Polyurethanbeschichtung auf 50 cm Breite geschnitten.

Die Folie wies folgende physikalischen Eigenschaften auf:

| | | |
|---|---|---|
| | | gemessen nach |
| Dicke der Folie | 50 µm | DIN 53370 |
| Foliengewicht | 48 g/m² | DIN 53365 |
| Zugfestigkeit längs | 30 N/mm² | DIN 53455-7-5 |
| Kraft bei 10 % Dehnung längs | 19 N/15mm | DIN 53455-7-5 |
| Zugfestigkeit quer | 20 N/mm² | DIN 53455-7-5 |
| Dehnung längs | 450 % | DIN 53455-7-5 |
| Dehnung quer | 450 % | DIN 53455-7-5 |
| Schlagzugzähigkeit längs | 3000 mJ/mm² | DIN 53448 |
| Schlagzugzähigkeit quer | 200 mJ/mm² | DIN 53448 |

Die Folie wurde Corona-vorbehandelt und im sofortigen Anschluß mit einer zunächst entgasten, zweikomponentigen, lösemittelfreien Polyurethan-Haftklebemasse unter geregelter Zudosierung von Stickstoff in den Mischkopf mit einer Auftragsstärke von 40 µm an einem Streichrakel beschichtet. Es wurde eine Schaumdichte von 600 Kg/m³ eingestellt. Die Beschichtungsgeschwindigkeit betrug 20 m/min. Die Aushärtung erfolgte bei einer Kanaltemperatur von 80°C. Die erhaltene Schutzfolie wurde am Rand besäumt und zu 200 m langen und 50 cm breiten Rollen gewickelt.

Die Polyurethan-Haftklebemasse setzte sich wie folgt zusammen:

| | Rohstoff | Gewichtsanteil [Gew.-%] |
|---|---|---|
| A-Komponente | Arcol 1030 ® | 33,2 |
| | Arcol P1000N ® | 30,2 |
| | Dibutylzinndilaurat | 0,2 |
| | Tinuvin 400 ® | 1,0 |
| | Tinuvin 292 ® | 0,5 |
| B-Komponente | Vestanat IPDI ® | 34,9 |

Die so hergestellte Selbstklebefolie ließ sich leicht und faltenfrei abwickeln und beim Gebrauch zum Schutz von Automobilen einwandfrei applizieren. Wegen des guten Tacks und leichter Korrigierbarkeit konnten die Verklebungsprozesse beschleunigt werden. Nach Gebrauch konnte die Selbstklebefolie bis zu einem halben Jahr Verklebungsdauer unter Außenbewitterung ohne Mängel wieder abgezogen werden. Die Schutzfolie war durch die in der folgenden Tabelle wiedergegebenen physikalischen Eigenschaften gekennzeichnet.

| | |
|---|---|
| Gesamtdicke Schutzfolie: | 90 µm |
| Klebkraft auf Stahl bei Raumtemperatur, ½ h nach dem Aufkleben bei einem Abzugswinkel von 180° und einer Abzugsgeschwindigkeit von 300 mm/min | 0,4 N/cm |
| Klebkraft auf 2K-PU-Lack bei Raumtemperatur, ½ h nach dem Aufkleben bei einem Abzugswinkel von 180° und einer Abzugsgeschwindigkeit von 300 mm/min | 0,4 N/cm |
| Klebkraft auf 2K-PU-Lack bei Raumtemperatur, 3d nach dem Aufkleben bei einem Abzugswinkel von 180° und einer Abzugsgeschwindigkeit von 300 mm/min | 0,8 N/cm |
| Klebkraft auf 2K-PU-Lack bei Raumtemperatur, nach 3d bei 90 °C bei einem Abzugswinkel von 180° und einer Abzugsgeschwindigkeit von 300 mm/min | 2,1 N/cm |
| Klebkraft auf 2K-PU-Lack bei Raumtemperatur, nach 3d bei 90 °C bei einem Abzugswinkel von 180° und einer Abzugsgeschwindigkeit von 20 m/min | 2,5 N/cm |
| Klebkraft auf 2K-PU-Lack bei Raumtemperatur, nach 14 d Wechselklima (Zyklus 2 wie unten angegeben), einem Abzugswinkel von 180° und einer Abzugsgeschwindigkeit von 300 mm/min | 2,8 N/cm |
| Klebkraft von der Rückseite bei einem Abzugswinkel von 180° und einer Abzugsgeschwindigkeit von 300 mm/min | 0,2 N/cm |

Das Wechselklima bestand aus folgenden Zyklen:

| Zyklus 1 | | Zyklus 2 | |
|---|---|---|---|
| Dauer [h] | Temperatur [°C] | Dauer [d] | Temperatur [°C] |
| 4 | 80 | 3 | 90 |
| 4 | -30 | plus 4mal Zyklus 1 | |
| 16 | 40 bei 100% rel. Feuchte | | |

Der Zyklus 2 wurde dabei insgesamt zweimal wiederholt.

Die Schutzfolie wurde auf frisch lackierten Blechen (2K-PU-Lack) verklebt und nach einer Woche abgezogen. lm Kantenbereich waren in schrägem Licht minimale Lackdeformationen zu erkennen, in der Fläche war kein Brillanzverlust zu beobachten. Auf Lack verklebte Muster wurden einer UV-Alterung unterzogen (800 h Xenotest 150 nach DIN 53387 1-A-X), nach dem Abziehen traten keine Klebemasserückstände auf.

### Beispiel 2

Eine 50 µm dicke Polyolefinfolie wurde analog Beispiel 1 hergestellt, wobei die Folie aus 80 Gew.-Teilen eines PP-Randomcopolymeren mit 5,5 % Ethylen (Novolen 3300 MC, BASF), 10 Gew.-Teilen LLDPE, 7 Gew.-Teilen Titandioxid und 0,45 Gew.-Teilen eines HALS-Lichtschutzmittels (Chimassorb 944, Ciba) bestand. Die Folie wies bei 10 % Dehnung in Längsrichtung eine Kraft von 14 N/15 mm auf. Die Folie wurde Corona-vorbehandelt und im sofortigen Anschluß analog Beispiel 1 mit einer zunächst entgasten, zweikomponentigen, lösemittelfreien Polyurethan-Haftklebemasse unter geregelter Zudosierung von Stickstoff in den Mischkopf mit einer Auftragsstärke von 30 µm an einem Streichrakel beschichtet. Es wurde eine Schaumdichte von 800 Kg/m³ eingestellt.

Die Polyurethan-Haftklebemasse setzte sich wie folgt zusammen:

| | Rohstoff | Gewichtsanteil [Gew.-%] |
|---|---|---|
| A-Komponente | Arcol 1004 ® | 4,3 |
| | Arcol 1067S ® | 60,7 |
| | Dibutylzinndilaurat | 0,2 |
| | Tinuvin 400 ® | 1,0 |
| | Tinuvin 292 ® | 0,5 |
| | Palatinol N ® | 9,0 |
| | Aerosil R202 ® | 1,0 |
| B-Komponente | Vestanat IPDI ® | 23,3 |

Die Klebkraft auf 2K-PU-Lack betrug ½ h nach dem Aufkleben 0,4 N/cm, nach 3d/90°C bei 300 mm/min Abzugsgeschwindigkeit 2,3 N/cm, nach 3d/90°C bei 20 m/min Abzugsgeschwindigkeit 2,0 N/cm und nach 14 d Wechselklima 2,4 N/cm (alle Meßparameter analog Beispiel 1). Die Schutzfolie wurde auf frisch lackierten Blechen (2K-PU-Lack) verklebt und nach einer Woche abgezogen. Weder im Kantenbereich noch in der Fläche waren Lackdeformationen erkennbar. Auf Lack verklebte Muster wurden 800 h Xenotest 150 ausgesetzt, nach dem Abziehen traten keine Klebmasserückstände auf.

### Beispiel 3

Eine 50 µm dicke Polyolefinfolie analoger Zusammensetzung und Fertigung wie in Beispiel 1 wurde in analoger Weise wie dort nach Corona-Vorbehandlung mit einer zunächst entgasten, zweikomponentigen, lösemittelfreien Polyurethan-Haftklebemasse unter geregelter Zudosierung von Argon in den Mischkopf mit einer Auftragsstärke von 50 µm an einem Streichrakel beschichtet. Es wurde eine Schaumdichte von 500 Kg/m³ eingestellt.

Die Polyurethan-Haftklebemasse setzte sich wie folgt zusammen:

| | Rohstoff | Gewichtsanteil [Gew.-%] |
|---|---|---|
| A-Komponente | Arcol 1004 ® | 4,8 |
| | Arcol 1067S ® | 67,6 |
| | Dibutylzinndilaurat | 0,2 |
| | Tinuvin 400 ® | 1,0 |
| | Tinuvin 292 ® | 0,5 |
| B-Komponente | Vestanat lPDl ® | 25,9 |

Die Klebkraft auf 2K-PU-Lack betrug ½ h nach dem Aufkleben 0,3 N/cm, nach 3d/90°C bei 300 mm/min Abzugsgeschwindigkeit 1,9 N/cm, nach 3d/90°C bei 20 m/min Abzugsgeschwindigkeit 1,4 N/cm und nach 14 d Wechselklima 2,1 N/cm (alle Meßparameter analog Beispiel 1). Die Schutzfolie wurde auf frisch lackierten Blechen (2K-PU-Lack) verklebt und nach einer Woche abgezogen. Nur im Kantenbereich waren sehr geringe Deformationen erkennbar, in der Fläche waren keine Lackdeformationen feststellbar. Auf Lack verklebte Muster wurden 800 h Xenotest 150 ausgesetzt, nach dem Abziehen traten keine Klebmasserückstände auf.

### Beispiel 4

Eine 65 µm dicke Polyolefinfolie wurde analog Beispiel 2 hergestellt, wobei die Folie aus einer 50 µm dicken Basisschicht analoger Zusammensetzung wie in Beispiel 2 und aus einer 15µm dicken Haftvermittlerschicht aus 20 Gew.-Teilen des PP-Randomcopolymeren und 80 Gew.-Teilen LLDPE bestand. Die Folie wies bei 10 % Dehnung in Längsrichtung eine Kraft von 18 N/15 mm auf.

Die Folie wurde wie in Beispiel 1 nach Corona-Vorbehandlung mit einer zunächst entgasten, zweikomponentigen, lösemittelfreien Polyurethan-Haftklebemasse unter geregelter Zudosierung von Stickstoff in den Mischkopf mit einer Auftragsstärke von 40 µm an einem Streichrakel beschichtet. Es wurde eine Schaumdichte von 600 Kg/m³ eingestellt.

Die Polyurethan-Haftklebemasse setzte sich wie folgt zusammen:

| | Rohstoff | Gewichtsanteil [Gew.-%] |
|---|---|---|
| A-Komponente | Arcol 1030 ® | 31,2 |
| | Arcol P1000N ® | 28,3 |
| | Dibutylzinndilaurat | 0,2 |
| | Tinuvin 400 ® | 1,0 |
| | Tinuvin 292 ® | 0,5 |
| B-Komponente | Desmodur W ® | 38,8 |

Die Klebkraft auf 2K-PU-Lack betrug ½ h nach dem Aufkleben 0,1 N/cm, nach 3d/90°C bei 300 mm/min Abzugsgeschwindigkeit 0,3 N/cm, nach 3d/90°C bei 20 m/min Abzugsgeschwindigkeit 1,9 N/cm und nach 14 d Wechselklima 2,5 N/cm (alle Meßparameter analog Beispiel 1). Die Schutzfolie wurde auf frisch lackierten Blechen (2K-PU-Lack) verklebt und nach einer Woche abgezogen. Sowohl im Kantenbereich als auch in der Fläche waren sehr geringe Deformationen erkennbar. Auf Lack verklebte Muster wurden 800 h Xenotest 150 ausgesetzt, nach dem Abziehen traten keine Klebmasserückstände auf.

### Beispiel 5

Eine 50 µm dicke Polyolefinfolie analoger Zusammensetzung und Fertigung wie in Beispiel 1 wurde in analoger Weise wie dort nach Corona-Vorbehandlung mit einer zunächst entgasten, zweikomponentigen, lösemittelfreien Polyurethan-Haftklebemasse unter geregelter Zudosierung von Stickstoff in den Mischkopf mit einer Auftragsstärke von 60 µm an einem Streichrakel beschichtet. Es wurde eine Schaumdichte von 300 Kg/m³ eingestellt.

Die Polyurethan-Haftklebemasse setzte sich wie folgt zusammen:

| | Rohstoff | Gewichtsanteil [Gew.-%] |
|---|---|---|
| A-Komponente | Epol ® | 89,5 |
| | Dibutylzinndilaurat | 0,1 |
| | Tinuvin 400 ® | 1,0 |
| | Tinuvin 292 ® | 0,5 |
| B-Komponente | Vestanat IPDI ® | 8,9 |

Die Klebkraft auf 2K-PU-Lack betrug ½ h nach dem Aufkleben 0,3 N/cm, nach 3d/90°C bei 300 mm/min Abzugsgeschwindigkeit 2,3 N/cm, nach 3d/90°C bei 20 m/min Abzugsgeschwindigkeit 2,9 N/cm und nach 14 d Wechselklima 3,1 N/cm (alle Meßparameter analog Beispiel 1). Die Schutzfolie wurde auf frisch lackierten Blechen (2K-PU-Lack) verklebt und nach einer Woche abgezogen. Weder im Kantenbereich noch in der Fläche waren Lackdeformationen erkennbar. Auf Lack verklebte Muster wurden 800 h Xenotest 150 ausgesetzt, nach dem Abziehen traten keine Klebmasserückstände auf.

### Vergleichsbeispiele

### Vergleichsbeispiel 1

Eine 50 µm dicke Polyolefinfolie analoger Zusammensetzung und Fertigung wie in Beispiel 1 wurde mit einer Haftklebemasse in einer Auftragsstärke von 20 µm beschichtet.

Als Haftklebemasse wurde ein Copolymer, bestehend aus 80 Mol-% Ethylen und 20 Mol-% Buten-(1), eingesetzt. Als Lösungsmittel wurde heißes Toluol verwendet. Die Klebkraft auf Lack lag bei 0,2 N/cm (frisch) bzw. 4,9 N/cm (nach Wechselklimalagerung). Die Schutzfolie riß beim Abziehen vom lackierten Blech ein, wenn man bei einer großflächigen Verklebung an einer Ecke zog. Eine Schutzfolie gemäß diesem Beispiel zeigte starke Lackdeformationen.

### Vergleichsbeispiel 2

Wie Vergleichsbeispiel 1, das Copolymer bestand zu 90 Mol-% aus Ethylen und zu 10 Mol-% aus Buten-(1). Als Lösungsmittel war heißes Toluol erforderlich. Die Klebkraft auf lackiertem Blech und auf Stahl lag unter 0,1 N/cm.

## Patentansprüche

1. Selbstklebende Oberflächenschutzfolie, insbesondere für Automobillackoberflächen, mit einer Trägerschicht und einer Selbstklebeschicht auf Basis eines geschäumten Polyurethans,
**dadurch gekennzeichnet, dass**
die Trägerschicht aus einer thermoplastischen Polyolefinfolie besteht, welche unverstreckt ist.

2. Selbstklebende Oberflächenschutzfolie nach Anspruch 1, **dadurch gekennzeichnet, dass** die Trägerschicht mindestens ein Polyolefin aus der Gruppe der Polyethylene und/oder der Gruppe der Polypropylene enthält.

3. Selbstklebende Oberflächenschutzfolie nach mindestens einem der vorhergehenden Ansprüche, **dadurch gekennzeichnet, dass** die Trägerschicht mindestens ein Lichtschutzmittel und/oder ein UV-Schutzmittel enthält, bevorzugt in einer Menge von mindestens 0,15 Gew.-%.

4. Selbstklebende Oberflächenschutzfolie nach mindestens einem der vorhergehenden Ansprüche, **dadurch gekennzeichnet, dass** die Dicke der Trägerschicht zwischen 20 und 80 *µ*m beträgt, gegebenenfalls einschließlich einer Haftvermittlerschicht, die zwischen der Trägerschicht und der Kleberschicht angeordnet ist.

5. Selbstklebende Oberflächenschutzfolie nach mindestens einem der vorhergehenden Ansprüche, **dadurch gekennzeichnet, dass** zur Bildung des Polyurethans der Selbstklebemasse aliphatische lsocyanate eingesetzt werden.

6. Selbstklebende Oberflächenschutzfolie nach mindestens einem der vorhergehenden Ansprüche, **dadurch gekennzeichnet, dass** zur Bildung des Polyurethans der Selbstklebemasse als Polyol-Komponente Polypropylenglykole, Polyethylenglykole, Polytetramethylenglykolether (Polytetrahydrofurane), hydrierte hydroxyl-funktionalisierte Polyisoprene, hydroxyl-funktionalisierte Polyisobutylene, hydroxyl-funktionalisierte Polyolefine, Polyester-Polyole oder Gemische der genannten Polyol-Komponenten eingesetzt werden.

7. Selbstklebende Oberflächenschutzfolie nach mindestens einem der vorhergehenden Ansprüche, **dadurch gekennzeichnet, dass** der Selbstklebemasse Füllstoffe, Pigmente, rheologische Additive, Additive zur Verbesserung der Haftung, Weichmacher, Harze (Klebrigmacher), Elastomere, Alterungsschutzmittel (Antioxidantien), Lichtschutzmittel, UV-Absorber sowie sonstige Hilfs- und Zusatzstoffe zugesetzt sind.

8. Selbstklebende Oberflächenschutzfolie nach mindestens einem der vorhergehenden Ansprüche, **dadurch gekennzeichnet, dass** zur Erzielung des Polyurethan-Schaums ein beliebiges Gas, vorzugsweise Stickstoff, Luft, Kohlendioxid oder ein Edelgas in der Polyurethan-Matrix dispergiert wird.

9. Selbstklebende Oberflächenschutzfolie nach mindestens einem der vorhergehenden Ansprüche, **dadurch gekennzeichnet, dass** die Dichte des Schaums im Bereich zwischen 20 und 1600 Kg/m³ , vorzugsweise zwischen 200 und 900 Kg/m³ liegt.

10. Selbstklebende Oberflächenschutzfolie nach mindestens einem der vorhergehenden Ansprüche, **dadurch gekennzeichnet, dass** die UV-Durchlässigkeit der Oberflächenschutzfolie im Wellenlängenbereich von 290 bis 360 nm unter 1 % liegt.

11. Verwendung einer Oberflächenschutzfolie nach zumindest einem der vorhergehenden Ansprüche auf frisch lackierten Oberflächen von Automobilen oder Automobilteilen als Montage- oder Transportschutz.

12. Verwendung einer Oberflächenschutzfolie nach zumindest einem der vorhergehenden Ansprüche zum Schutz von empfindlichen Lack-, Metall-, Kunststoff- oder Glasoberflächen.

13. Verfahren zur Herstellung einer Oberflächenschutzfolie nach zumindest einem der vorhergehenden Ansprüche, wobei
a) in einem Behälter A im wesentlichen eine Polyol- und in einem Behälter B wesentlichen eine lsocyanat-Komponente vorgelegt werden, wobei in den Komponenten das Gas zur Erzielung des Schaums bereits enthalten sein kann,
b) in einem Mischer die Polyol- und die lsocyanat-Komponente sowie das Gas, sofern es nicht schon vorher in die Komponenten eingemischt worden ist, gemischt werden,
c) die somit gemischte, das Gas zur Erzielung des Schaumes enthaltende Polyurethanmasse auf eine thermoplastische Polyolefinfolie, welche unverstreckt ist, aufgebracht wird,
d) das Laminat aus Polyolefinfolie und Polyurethanmasse durch einen Wärmekanal geführt wird, in dem die Polyurethanmasse als selbstklebender Schaum aushärtet,
e) das Laminat in einer Wickelstation aufgewickelt wird.

## Claims

1. Self-adhesive surface protective film, particularly for automobile paint surfaces, having a backing layer and a self-adhesive layer based on a foamed polyurethane, **characterized in that** the backing layer comprises a thermoplastic polyolefin sheet which is unoriented.

2. Film according to Claims 1, **characterized in that** the backing layer comprises at least one polyolefin from the group of the polyethylenes and/or the group of the polypropylenes.

3. Film according to at least one of the preceding claims, **characterized in that** the backing layer comprises at least one light stabilizer and/or one UV stabilizer, preferably in an amount of at least 0.15% by weight.

4. Film according to at least one of the preceding claims, **characterized in that** the thickness of the backing layer is between 20 and 80 µm, including where appropriate an adhesion promoter layer arranged between the backing layer and the adhesive layer.

5. Film according to at least one of the preceding claims, **characterized in that** aliphatic isocyanates are used in forming the polyurethane of the self-adhesive composition.

6. Film according to at least one of the preceding claims, **characterized in that** the polyurethane of the self-adhesive composition is formed using as polyol component polypropylene glycols, polyethylene glycols, polytetramethylene glycol ethers (polytetrahydrofurans), hydrogenated hydroxyl-functionalized polyisoprenes, hydroxyl-functionalized polyisobutylenes, hydroxyl-functionalized polyolefins, polyester-polyols, or mixtures of said polyol components.

7. Film according to at least one of the preceding claims, **characterized in that** fillers, pigments, rheological additives, additives for improving the adhesion, plasticizers, resins (tackifiers), elastomers, ageing inhibitors (antioxidants), light stabilizers, UV absorbers, and other auxiliaries and additives are added to the self-adhesive composition.

8. Film according to at least one of the preceding claims, **characterized in that** to obtain the polyurethane foam an arbitrary gas, preferably nitrogen, air, carbon dioxide or a noble gas, is dispersed in the polyurethane matrix.

9. Film according to at least one of the preceding claims, **characterized in that** the density of the foam is in the range between 20 and 1 600 kg/m³ , preferably between 200 and 900 kg/m³.

10. Film according to at least one of the preceding claims, **characterized in that** the UV permeability of the surface protective film in the wavelength range from 290 to 360 nm is less than 1%.

11. Use of a surface protective film according to at least one of the preceding claims on freshly painted surfaces of automobiles or automobile parts as assembly protection or transit protection.

12. Use of a surface protective film according to at least one of the preceding claims to protect sensitive surfaces of paint, metal, plastic or glass.

13. Process for producing a surface protective film according to at least one of the preceding claims, which comprises
a) charging a vessel A with substantially a polyol constituent and a vessel B with substantially an isocyanate component, it being possible for the gas for obtaining the foam to be already present in the constituents,
b) in a mixer, mixing the polyol and isocyanate constituents and also the gas, if not already mixed into the constituents beforehand,
c) applying the polyurethane composition thus mixed, comprising the gas for
obtaining the foam, to a backing material, in particular a polyolefin sheet, d) guiding the laminate comprising backing material and polyurethane composition through a heat tunnel, in which the polyurethane composition cures as a self-adhesive foam, and
e) winding up the laminate in a winding station.

## Revendications

1. Film protecteur de surface, autoadhésif, en particulier pour des surfaces de peinture d'automobile, comportant une couche de support et une couche autoadhésive à base d'un polyuréthanne expansé, **caractérisé en ce que** la couche de support consiste en un film de polyoléfine thermoplastique qui est non étiré.

2. Film protecteur de surface, autoadhésif, selon la revendication 1, **caractérisé en ce que** la couche de support contient au moins une polyoléfine choisie dans le groupe des polyéthylènes et/ou dans le groupe des polypropylènes.

3. Film protecteur de surface, autoadhésif, selon au moins l'une des revendications précédentes, **caractérisé en ce que** la couche de support contient au moins un photoprotecteur et/ou un agent de protection contre les UV, de préférence en une quantité d'au moins 0,15 % en poids.

4. Film protecteur de surface, autoadhésif, selon au moins l'une des revendications précédentes, **caractérisé en ce que** l'épaisseur de la couche de support est comprise entre 20 et 80 µm, éventuellement y compris une couche de promoteur d'adhérence qui est disposée entre la couche de support et la couche d'adhésif.

5. Film protecteur de surface, autoadhésif, selon au moins l'une des revendications précédentes, **caractérisé en ce que** des isocyanates aliphatiques sont utilisés pour la formation du polyuréthanne de la matière autoadhésive.

6. Film protecteur de surface, autoadhésif, selon au moins l'une des revendications précédentes, **caractérisé en ce que**, pour la formation du polyuréthanne de la matière autoadhésive, on utilise en tant que composant polyol des polypropylèneglycols, des polyéthylèneglycols, des polytétraméthylèneglycoléthers (polytétrahydrofurannes), des polyisoprènes à fonctionnalité hydroxy hydrogénés, des polyisobutylènes à fonctionnalité hydroxy, des polyoléfines à fonctionnalité hydroxy, des polyester-polyols ou des mélanges des composants polyol cités.

7. Film protecteur de surface, autoadhésif, selon au moins l'une des revendications précédentes, **caractérisé en ce qu'**on ajoute à la matière autoadhésive des charges, des pigments, des additifs de rhéologie, des additifs destinés à l'amélioration de l'adhérence, des plastifiants, des résines (agents de pégosité), des élastomères, des agents anti-vieillissement (anti-oxydants), des photoprotecteurs, des absorbeurs UV ainsi que d'autres adjuvants et additifs.

8. Film protecteur de surface, autoadhésif, selon au moins l'une des revendications précédentes, **caractérisé en ce que**, pour l'obtention de la mousse polyuréthanne, un gaz quelconque, de préférence l'azote, l'air, le dioxyde de carbone ou un gaz rare, est dispersé dans la matrice polyuréthanne.

9. Film protecteur de surface, autoadhésif, selon au moins l'une des revendications précédentes, **caractérisé en ce que** la densité de la mousse se situe dans la plage comprise entre 20 et 1 600 kg/m³, de préférence entre 200 et 900 kg/m³.

10. Film protecteur de surface, autoadhésif, selon au moins l'une des revendications précédentes, **caractérisé en ce que** la transparence aux UV du film protecteur de surface, dans la plage de longueurs d'onde allant de 290 à 360 nm, est inférieure à 1 %.

11. Utilisation d'un film protecteur de surface selon au moins l'une des revendications précédentes, sur des surfaces fraîchement peintes d'automobiles ou de parties d'automobiles en tant que protection pendant le montage ou le transport.

12. Utilisation d'un film protecteur de surface selon au moins l'une des revendications précédentes, pour la protection de surfaces sensibles de peintures, métaux, matières plastiques ou verre.

13. Procédé pour la fabrication d'un film protecteur de surface selon au moins l'une des revendications précédentes, dans lequel
a) dans un récipient A on dispose au préalable essentiellement un composant polyol et dans un récipient B on dispose au préalable essentiellement un composant isocyanate, le gaz pour la formation de la mousse pouvant déjà être contenu dans les composants,
b) dans un mélangeur on mélange le composant polyol et le composant isocyanate ainsi que le gaz, s'il n'a pas déjà été préalablement incorporé dans les composants,
c) la matière polyuréthanne ainsi mélangée, contenant le gaz pour la formation de la mousse, est appliquée sur un film de polyoléfine thermoplastique qui est non étiré,
d) le stratifié de film de polyoléfine et matière polyuréthanne est envoyé dans un tunnel de chauffage, dans lequel la matière polyuréthanne est durcie sous forme d'une mousse autoadhésive,
e) le stratifié est enroulé dans un poste d'enroulement.
